# EUROPEAN PATENT APPLICATION

(11) **EP 3 062 269 A1**
(43) Date of publication of application: **31.08.2016**
(21) Application number: 16171849.9
(22) Date of filing: 29.05.2016
(51) Int. Cl.: G06Q 10/10, G06Q 50/00

(54) **CREATION, MANAGEMENT, MANIPULATION, AND SYNCHRONIZATION OF USER RELATIONS ACROSS MULTIPLE WEB, COMPUTER, AND MOBILE BASED APPLICATIONS**

(71) Applicant: van Dugteren, Daan Jan, 1075 AJ Amsterdam (NL)
(72) Inventor: van Dugteren, Daan Jan, 1075 AJ Amsterdam (NL)

(57) **Abstract**

Systems, methods, and computer programs for establishing user-to-user relations across multiple web, computer, and mobile applications and/or social media platforms virtually simultaneously and/or synchronously.

## Description

### BACKGROUND OF THE INVENTION

The present invention is in the technical field of and computer systems, programs and methods. More particularly, the present invention is in the technical field of online computer, mobile, and/or web application based systems and methods which allows for the creation, management, manipulation, and synchronization of user relations on social media platforms and any other platforms and/or computer programs and websites that allow for the handling, creation, and manipulation of user relations.

When users of web, computer, or mobile based applications such as social media platforms (social media networks) wish to establish a relation with another specific user or entity (also generally known, in certain embodiments, as 'Follow', 'Friend', 'Subscribe', 'Like', 'Create Relation') across a multitude of applications that both users utilize, the user is currently required to go through a process to create or request these relations to be established on every single social media channel they wish for the relation to be established on manually. For example: when User A wishes to establish a relation with User B across multiple social media applications, User A is required to open and utilize every social media platform application manually on their respective devices, find User B on said applications, and initiate the process for establishing the desired user-to-user relation based on the Application's design and instructions. This is a repetitive, inefficient, and time consuming process.

### SUMMARY OF THE INVENTION

In view of the foregoing disadvantages inherent in the known types of systems, methods, and computer programs for establishing user-to-user relations between two or more users on applications currently present in the prior art, the present invention provides new and improved user relation systems, methods, and computer programs that allows user relations between two or more users and/or entities to be established, managed, and synchronized across multiple social networks, social media platforms, or other web-, computer-, and/or mobile based applications virtually simultaneously.

### Example:

User A wishes to establish a user-to-user relation with User B on all applications that allow for user relations to be established, who both User A and User B are currently actively utilizing (for example: social media platforms and networks, specific computer and mobile systems, computer games and websites).

Some examples of the general definitions of establishing user relations on specific applications are 'Following' ('Follow'), 'Friend '('Add Friend'), 'Subscribing' ('Subscribe'), or 'Liking' ('Like').

With these new systems, methods, and computer programs, user relations across multiple web, computer, and mobile based applications, and software can be established between User A's and User B's registered user accounts located on said multiple applications by, for example, in one embodiment, a single user or computer server initiated command, input, button, or programmatic function.

### BRIEF DESCRIPTION OF THE DRAWINGS

The attached figures and drawings describe interactions between:

"Web, computer, software, hardware, mobile based (and/or other) applications, programs, and/or social media platforms and networks", henceforth referred to as "Application" (singular) and "Applications" (plural).

"Users and/or other entities or applications that may utilize Applications", are referred to as "User" (singular) and "Users" (plural).

Relations between Users are generally (but not always specifically) represented on Applications as 'Following' ('Follow), 'Friend' ('Add Friend'), 'Subscribing' ('Subscribe'), or 'Liking' ('Like'). These definitions of user relations help understand what is defined below as a relation.

A relation is established from one User to another User, usually for the goal of being able to perform specific actions between said users. For example, in one embodiment, User A could establish a relation with User B in order to receive the content of User B on their computer devices. This type of establishing relations is popular amongst social networks and social media platforms on web, computer, and mobile based systems.

Applications that feature some form of User Relation management (i.e. the ability for users of the Application to, what is sometimes defined as, 'Follow' or 'Friend' other users of the Application) are henceforth referred to as 'Third Party Applications'.

An Application that represents an embodiment of the current invention, which allows for the Creation, Management, Manipulation, and Synchronization of User Relations across Multiple (Web, Computer, and Mobile Based) Third Party Applications is referred to below as a 'Source Application'.

A Source Application may potentially give Users registered on the Source Application the ability to Authorize (also generally known as 'Connect') user accounts that said Users may have registered on Third Party Applications with the Source Application.

When a User Authorization between a Source Application and Third Party Application has been established, the Source Application has the ability to create and manipulate the user data and user relations of the authorized user account located on the Third Party Application, on said Third Party Application's server or servers, in accordance with an embodiment of the present invention.

Fig. 1 depicts a flow chart displaying possible embodiments and the process thereof to reach the desired goal of establishing multiple user-to-user relations across multiple Third Party Applications in accordance with an embodiment of the present invention.

Fig. 2 depicts a situation where example 'User A' has not yet established user-to-user relations with 'User B' across 3 example social media platforms (Third Party Applications) in accordance with an embodiment of the present invention..

Fig. 3 depicts an example Source Application where the first step is initiated to authorize with said Source Application that may contain embodiments of the invention, and which may lead to the initialization of the process depicted in the Flow Chart of Fig. 1 in accordance with an embodiment of the present invention.

Fig. 4 depicts an example view of **14** (*User Settings On Application*) in the Flow Chart of Fig 1.

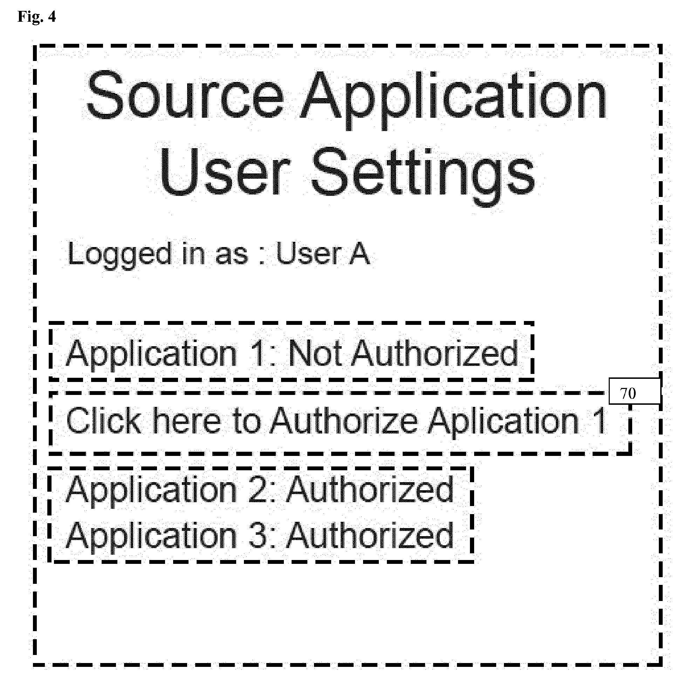

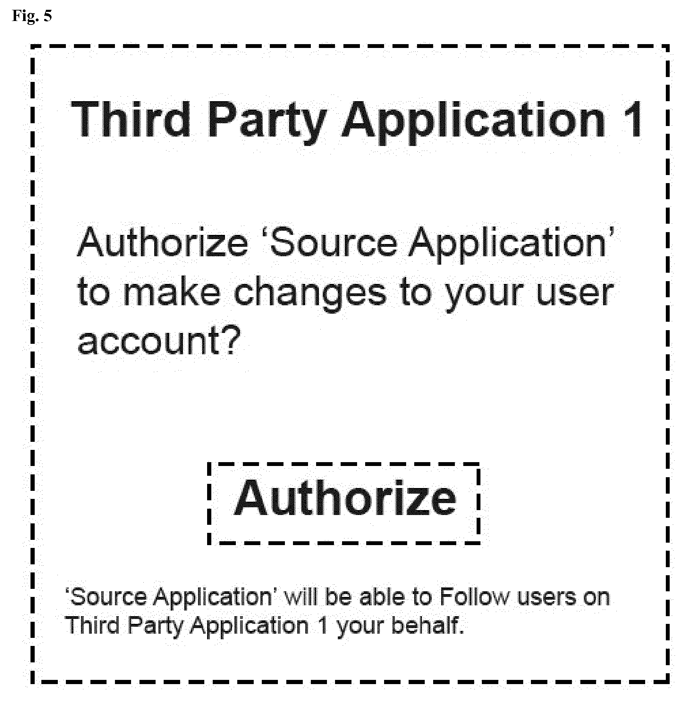

Fig. 5 depicts an example view of **22,** which, in one embodiment, may be initiated from the example 'Click here to Authorize Application 1' button depicted in Fig. 4, wherein a Source Application user initiates an Authorization dialog for the Source Application to gain permission from a Third Party Application to read and manipulate user relations (in this example defined as 'following') of a specified user account located on said Third Party Application (in this example, a user account located on social media platform 'Third Party Application 1' belonging to User A) in accordance with an embodiment of the present invention..

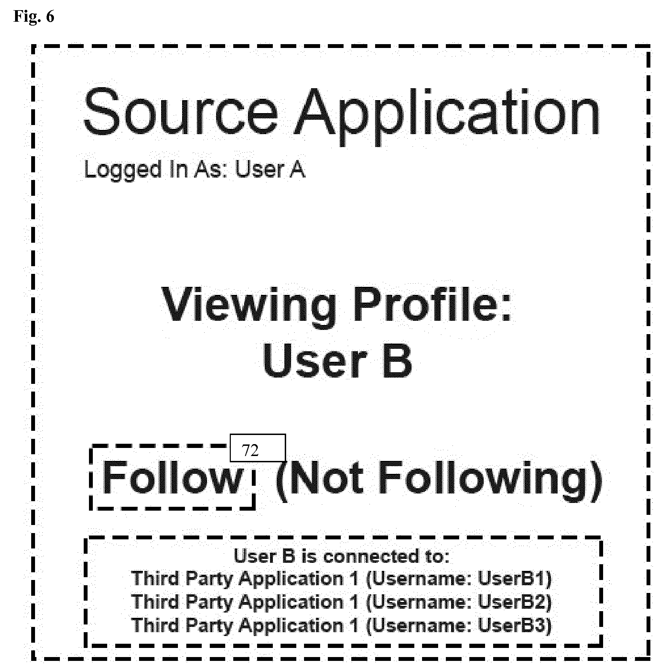

Fig. 6 depicts an example of a 'user profile' that may be depicted by an example Source Application in order to identify the various Third Party Applications and social media platforms that a user may authorize ('connect'), or may have already authorized ('connected'), with the example application in accordance with an embodiment of the present invention. The figure also depicts an example button ('Follow') that may function as a method for establishing user relations across the multiple authorized ('connected') third party applications & social media platform accounts in accordance with an embodiment of the present invention.

Fig. 7 depicts a desired result of the invention, where, in one embodiment, after an action (in Fig. 5 the example of a button on a web page is provided) has been taken to initialize the final step before 'End' in the Flow Chart of Fig. 1, where the requested 'user-to-user' (in this example, User A to User B) relation is established on the authorized Third Party Applications in accordance with an embodiment of the present invention..

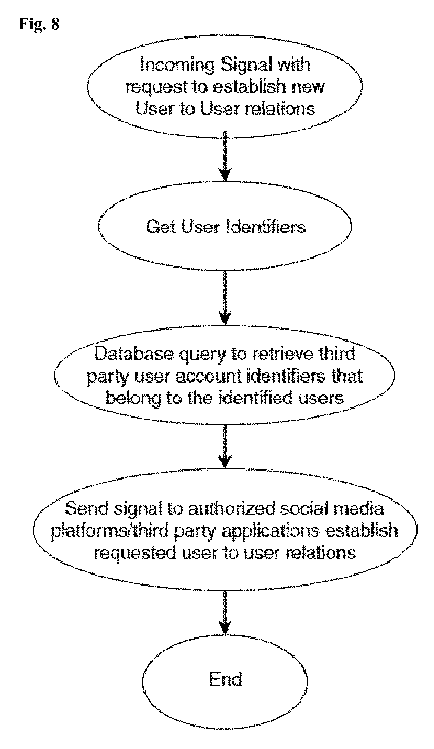

Fig. 8 is a flow chart diagram that depicts, in broad lines, the actions that the server computer ('Source Application') may undertake to process a user (or server) signal into the desired end result of establishing user-to-user relations across multiple social media platforms ('Third Party Applications') in accordance with an embodiment of the present invention..

Fig. 9 depicts a functional diagram of a virtually simultaneously multiple user relations establishment system in accordance with an embodiment of the present invention.

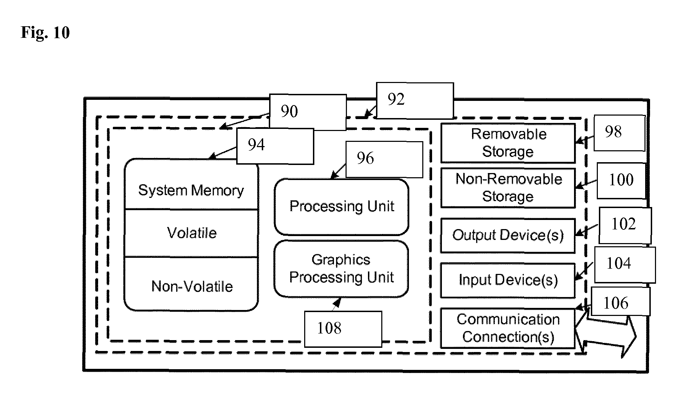

Fig. 10 is a schematic of an exemplary computing device which can be used to practice the technique of reading and manipulating multiple user-to-user relations virtually simultaneously/synchronously in accordance with an embodiment of the present invention.

### DETAILED DESCRIPTION OF THE INVENTION

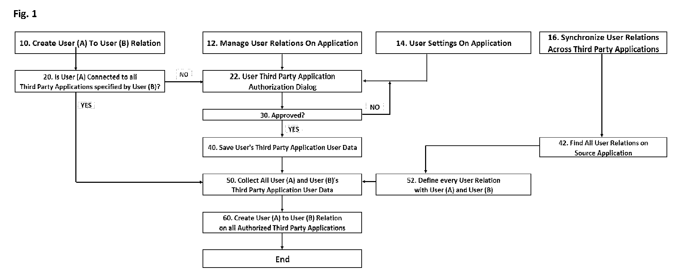

Referring now to the invention in more detail, in Fig. 1 there is shown a Flow Chart which describes the process to accomplishing the goal of establishing multiple user-to-user relations across multiple web, computer, and mobile based applications, programs, and software.
Two users with registered accounts on a Source Application (see 'Flow Chart Description') are defined as User A and User B.
In Fig. 1 **10****,** User A establishes a user relation with User B on the Source Application, and initiates a process to establish 'User A to User B' relations on multiple Third Party Applications.
Because a 'User A to User B' relation has been established on the Source Application, the Source Application will create 'User A to User B' user relations on Third Party Applications (for example Third Party Applications specified by User B, or Applications who both User A and user B are 'connected' to in accordance with an embodiment of the present invention).

### FLOW CHART DESCRIPTION

**10, 12, 14,** and **16** in the Flow Chart in Fig. 1 refer to some of the possible scenarios that may initiate the process of creating, updating, or in any other way manipulating User Relations across multiple Applications through a Source Application.

**10:** A User initiated action to create a user relation. This item initiates an action (User-, Application-, or otherwise initiated) to create one or more user/entity relations on own and/or Third Party Applications. A Source Application may allow Users who are registered to the Source Application to create user relations (for example 'Follow' or 'Friend') a user on the Source Application itself, and simultaneously on Third Party Applications that both users have user accounts on.

12: A Source Application with the ability to manipulate relations between users and entities on own and Third Party Applications may allow authorized Users to manage and manipulate their previously created relations located on the Source Application and/or Third Party Applications, giving Users the ability to perform create/read/update/delete and otherwise manipulate User relations on both the Source Application and across multiple Third Party Applications.

**14:** A Source Application may give Users registered on the Source Application the ability to authorize (also known as 'Connect') the accounts the Users may have registered on Third Party Applications, with the Source Application. A User Authorization between a Source Application and a Third Party Application allows the Source Application to create and manipulate specific user relations on the authorized Third Party Application.

16: A Source Application may give Users the ability to authorize specific Third Party Application User accounts with the Source Application as described in **14.**
The Source Application may then have and provide the ability to manipulate (Create, Manage, or Update) User Settings and relations of specific (authorized) users on Third Party Applications, as described in **10, 12,** and **14.**
One example of manipulating relations across Third Party Applications through a Source Application is having a User create a user account on the Source application, then having the User Authorize ('connect') Third Party Applications with the Source Application, giving the Source Application the ability to manipulate the authorized Users' relations (i.e. 'Follow', 'Add Friend', 'Subscribe', 'Like') on the Authorized Third Party Applications. For example: An authorized User (henceforth referred to as User A) may have the ability to create a user relation with another authorized User (henceforth referred to as User B) on the Source Application, creating the relation on the Source Application itself, and on the Third Party Applications (i.e. social networks) that both User A and User B may have authorized ('connected') using an authorization dialog (Fig. 5) on the Source Application. Users of the Source Application may later authorize a new Third Party Application (for example a new social network application they recently created a user account on) on the Source Application.
If User A has previously established a relation on the Source Application with User B (as described in **10:** (Create User A to User B Relation), and User A has since authorized ('connected') a new Third Party Application with their Third Party Application user account to the Source Application, and User B has also authorized ('connected') said Third Party Application, with User B's Third Party Application user account, with the Source Application, then the Source Application may recognize both users are now both authorized with the new Third Party Application, and thus create the same 'User A to User B' Relation between User A's and User B's Third Party Application user accounts on the Third Party Application.
Since **16** describes a scenario creating user relations across multiple Third Party Applications, additionally creating new user relations if a new Third Party Application was authorized by both User A and User B on the Source Application and if a 'User A to User B' relation already exists on the Source Application, this scenario can be defined as 'Synchronizing User Relations Across Third Party Applications'.

20: After User A has created a user relation on the Source Application, the Source Application may perform a database query which returns the information required to determine if User A has authorized specific Third Party Applications that User B may have specified they want the user relation to be established on.
For instance: User B may have specified a specific Third Party Application they want the user relation to be established on. In order for the Source Application to establish the user relation between the Third Party Application user accounts belonging to User A and User B on the Third Party Application, User A is required to grant the Source Application access to their user account located on the Third Party Application so that the Source Application receives the ability to manipulate User A's relations on the Third Party Application (as described in 2b).
User B may also have not specified a specific requirement of Third Party Applications that User A should connect to, in which case the flow also goes to **50.**

**22:** In the case User A has not yet granted the Source Application the ability to manipulate User A's Third Party Application user account (so as to manipulate the user relations on the Third Party Application), the Source Application will open a dialog of some sort (for example an Internet web browser window or mobile application dialog), where User A can grant the Source Application access to manipulate User A's Third Party Application user account. In the case that authorization is granted, the Source Application is able to read and manipulate User A's Third Party Application user account data and user relations data on the Third Party Application.

**30:** The Source Application performs a computer server action or database query to determine whether the user has approved the authorization request displayed in the Authorization Dialog. If the authorization was successful, the Source Application gains the ability to manipulate user data and user relations of the authorized Third Party Application user account on the Third Party Application.
User A on the Source Application has specified to the Third Party Application that the Source Application may have access to manipulate User A's Third Party Application user account data, specifically (but may not be limited to) user relations.
In the case permission was granted, the flow would continue to **40.** If User A has not authorized ('connected') their Third Party Application's user account with the Source Application, the flow (Fig. 1) would return to **22** (Third Party Application Authorization Dialog).

**40:** After authorization, the Source Application now has access to read and manipulate User A's user account data located on the Third Party Application.
The Source Application performs a database query to save User A's Third Party Application User Data, so that User A's Third Party Application user data can be read and manipulated.

**42:** As explained in the description of **16,** the Source Application may be synchronizing the user relations across Third Party Applications. **42** indicates the step the Source Application may take to find the relations established between registered users on the Source Application.

**50:** In order to establish user relations between two user accounts located at Third Party Applications, the Source Application must perform a database query to retrieve all Third Party Applications' user data belonging User A and User B on the Source Application's database or tangible storage device.

**52:** As a follow-up step of the synchronization process initiated in **16,** once the Source Application has found all existing user relations on the Source Application, every user is defined as a User A (who could be defined as the desired 'follower' on the Third Party Application), and User B (who could be defined as the desired user to be 'followed' on the Third Party Application). For every user relation found on the Source Application; depiction **50** in the Flow Chart will be executed.

**60.** In one embodiment of the present invention, the Source Application performs an action (through a programmatic digital signal or form of communication to the Third Party Applications) that initiates all Third Party Applications, who both User A and User B have authorized their Third Party Application user accounts with at the Source Application, to create the relation between the User A's and User B's specified user accounts located on the Third Party Applications.
For example, in one embodiment, if User A has the identifier 'UserA1', 'UserA2', and 'UserA3' on three specified Third Party Applications, and User B has the identifiers
'UserB1', 'UserB2', and 'UserB3' on said Third Party Applications, then establishing the
'User A to User B' relation across the three Third Party Applications would include the establishment of a 'UserA1 to UserB1' user relation on Third Party Application 1, 'UserA2 to UserB2' on Third Party Application 2, and 'UserA3 to UserB3' on Third Party Application 3.

An example of the Synchronization process described in the Flow Chart **10, 42,** and **52:**
If User A has a user-to-user relation established with another User, i.e. 'User C' on the Source Application, and when User A has authorized a new Third Party Application, and User C is also connected to said Third Party Application, then the Source Application may create the 'User A to User C' relation, that is established on the Source Application, between the Third Party Application's user accounts located on the Third Party Application. For example:
   Source Application and Third Party Application X both define user relations as 'Follow' and 'Following'. User A 'follows' User C on Source Application. User A later authorizes ('connects') (22) Application X. User C has also authorized ('connected') (22) Application X.
The Source Application establishes the User A to User C relation on Application X, so that User A is now also 'following' User C on Application X.

The advantages of the present invention include, without limitation, the ability to efficiently create user-to-user relations across multiple social networks virtually simultaneously and/or synchronously.

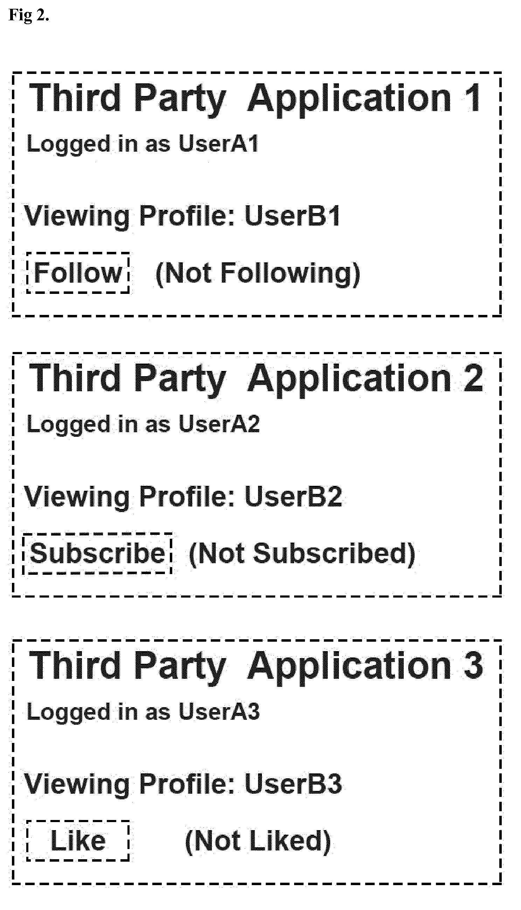

### EXAMPLE DEPICTED IN SERIES OF FIGURES FIG. 2 TO FIG. 7

Another example is displayed in a series of figures: Fig. 2, Fig. 3, Fig. 4, Fig. 5, Fig. 6, and Fig. 7:

Fig. 2 depicts an example situation across multiple social media platforms (Third Party Applications), where example User A does not have user relations established with example User B across.

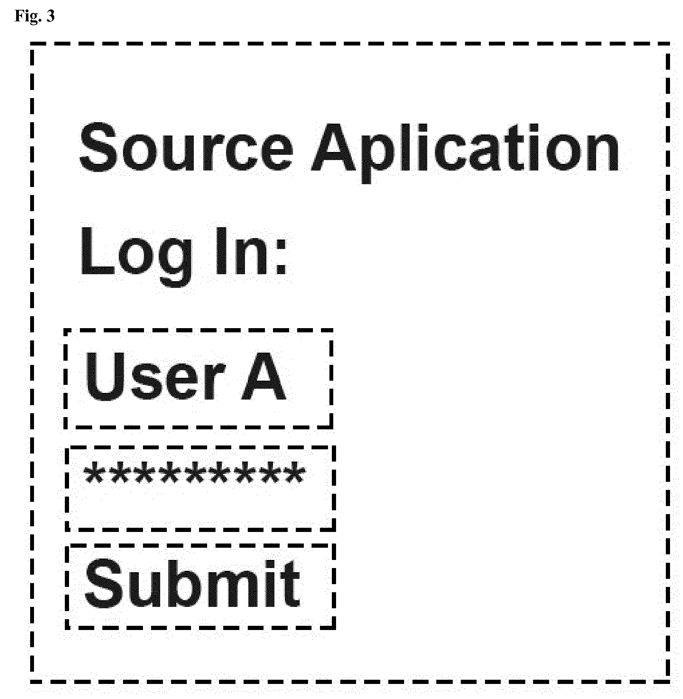

Fig. 3: User A authorizes with the Source Application, displaying a Username and Password input, and a Submit button which would send a query to the server in order to authorize the user.

Fig 4: The Source Application 'User Settings' displays possible Third Party Applications that User A can authorize with, so as to later be able to establish user relations across these Third Party Applications with the Third Party Applications user accounts belonging to other Users of the Source Application. 70 displays a depiction of a button that may lead to an authorization dialog as displayed in Fig. 5.

Fig. 5: An example authorization dialog, as explained in **20** in the Flow Chart of Fig. 1, which may display after requesting authorization with a Third Party Application. In this figure, the definition of manipulating user to user relations is defined as "follow" and "following". Upon authorization (in this case by clicking the 'Authorize' button), the Source Application will have gained the ability to manipulate user relations on the account of User A.

Fig 6 depicts an example 'profile page' that may be displayed in one embodiment of the Source Application, which allows the user to initialize the establishment of a user relation on the Source Application, and to initialize the establishment of user relations across multiple authorized Third Party Applications. In Fig. 6, the method provided for a user establishing these user-to-user relations is depicted in **72:** the 'Follow' button.

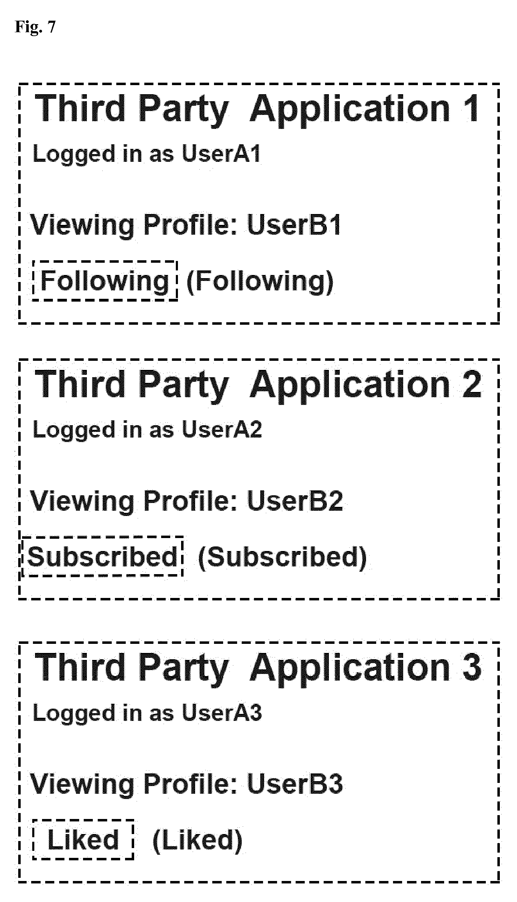

Fig. 7. Upon clicking the 'Follow' button **(72),** the user to user relations have been established on the Source Application and on the Third Party Applications. In this figure, the third party applications are displayed to now have the 'User A to User B' user-to-user relations established between the user accounts belonging to User A (UserA1, UserA2, UserA3) and User B (UserB1, UserB2, UserB3).

Since the authorization process depicted in Fig. 5 is only required once for a User and then saved in a database in the Source Application, giving the Source Application the ability to read and manipulate user relations on the authorized Third Party Application user account located on the Third Application permanently (until the authorization is removed manually), the present invention is able to manipulate user relations on the authorized Application without requiring any form of re-authorization by the user.
The computer program, system, and method of the present invention are able to virtually simultaneously create user-to-user relations, eliminating the requirement for Users to establish user relations on the Third Party Applications manually, therefore making the establishment of user-to-user and any such relations across multiple web, computer, and mobile applications, software, programs, devices and websites an easier, faster, and effortless process.

In broad embodiment, the present invention is a program, system, and method for establishing and/or synchronizing multiple user-to-user relations across multiple applications and/or social media platforms virtually simultaneously.

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but by all embodiments and methods within the scope and spirit of the invention.

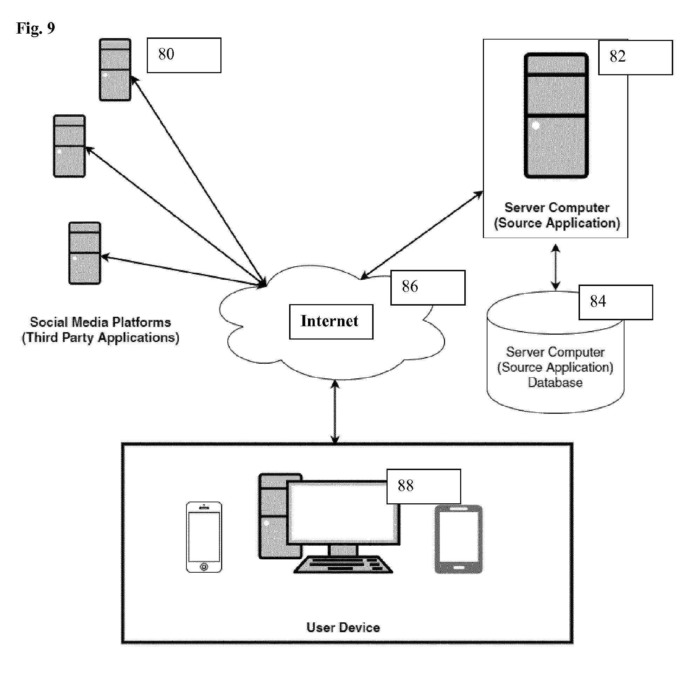

Fig. 9 depicts a functional diagram of a virtually simultaneously multiple user relations establishment system in accordance with an embodiment of the present invention.

A user device **80** sends a signal with the request to establish User Relations between the requesting User and another User, on multiple Social Media Platforms (Third Party Applications) **80** to the Server Computer (Source Application) **82** through the Internet **86.** Said signal is processed on Server Computer (Source Application) **82** which reads/writes from/to to the Server Computer (Source Application) Database **84** in order to retrieve and save the appropriate Social Media Platforms (Third Party Applications) **80** User Identifiers of the Users where the User Relations should be established (for example, the multiple Social Media Platform User identifiers of User A and the Social Media Platform User identifiers of User B are saved/retrieved to/from the Database **84** in order to discover the User-to-User relations that should be established across Social Media Platforms **80).** The Server Computer sends a signal through the Internet **86** in the protocol desired by the Social Media Platforms (Third Party Applications) **80** containing the appropriate data to establish User Relations to Social Media Platforms (Third Party Applications) **80** through the Internet **86.** The Social Media Platforms (Third Party Applications) **80** then establish the desired User-to-User Relations. The desired result of establishing multiple User to User relations across multiple Social Media Platforms (Third Party Applications) **80** has now been achieved.

## Claims

1. A method for reading and establishing user relations across multiple web, computer, and mobile based applications, the method comprising:
a. An application, program, website, computer, electronic device, or other form of software or hardware (henceforth referred to as 'the application') reading and manipulating user data located on own and third party applications.
b. The application reading and establishing relations between users and entities simultaneously and/or synchronously on multiple own and third party applications, such as (but not limited to) web, computer, and mobile based programs, websites, and applications that allow for user-to-user and other such user to entity relations to be established.

2. A computer system for reading and establishing user relations across multiple web, computer, and mobile based applications, the computer system comprising:
a. One or more processors, one or more computer-readable memories and one or more computer-readable tangible storage devices.
b. Program instructions to read and manipulate user data and user relation data on a multitude of other computer systems, software, programs, applications, servers, databases, and any such third party applications.
c. Program instructions, stored on at least one of the one or more storage devices for execution by at least one of the one or more processors via at least one of the one or more memories, to read and manipulate multiple user data and user relation data (user-to-user relations and any such user-to-entity relations) entries on a multitude of other computer systems, software, programs, applications, servers, databases, and any such third party applications virtually simultaneously.

3. A computer program product for reading and establishing user relations across multiple web, computer, and mobile based applications, the computer system comprising:
a. One or more computer-readable tangible storage devices.
b. Program instructions to read and manipulate user data and user relation data on a multitude of other computer systems, software, programs, applications, servers, databases, and any such third party applications.
c. Program instructions, stored on at least one of the one or more storage devices for execution by at least one of the one or more processors via at least one of the one or more memories, to read and manipulate multiple user data and user relation data (user-to-user relations and any such user-to-entity relations) entries on a multitude of other computer systems, software, programs, applications, servers, databases, and any such third party applications virtually simultaneously.
